# EUROPEAN PATENT SPECIFICATION

(11) **EP 2 694 563 B1**
(45) Date of publication and mention of the grant of the patent: **20.01.2016**
(21) Application number: 12710741.5
(22) Date of filing: 28.03.2012
(51) Int. Cl.: C08G 18/08, C08G 18/66, C09D 175/06

(54) **POLYURETHANE UREA DISPERSIONS**
POLYURETHAN-HARNSTOFF-DISPERSIONEN
DISPERSIONS DE POLYURÉTHANE-URÉE

(30) Priority: 04.04.2011 EP 11160951
(43) Date of publication of application: 12.02.2014
(73) Proprietor: Covestro Deutschland AG, 51373 Leverkusen (DE)
(72) Inventor: GRABLOWITZ, Hans Georg, 50733 Köln (DE); FELLER, Thomas, 42659 Solingen (DE); MICHAELIS, Thomas, 51375 Leverkusen (DE); AVTOMONOV, Evgeny, Pudong, Shanghai, 201206, P.R. (CN)
(74) Representative: Levpat
(86) International application number: PCT/EP2012/055452
(87) International publication number: WO 2012/136521

(56) References cited:
- EP-A1- 1 426 423
- DE-A1- 10 215 474
- US-A1- 2007 049 684
- US-A1- 2008 146 748

## Description

The present invention relates to aqueous polyurethane urea dispersions based on polyester polyols, which dispersions result in low emissions and are used as coating compositions.

Aqueous polyurethane urea dispersions (PUDs) have become established as coating compositions in a wide variety of fields owing to their outstanding properties such as elasticity, solvent resistance and film-forming ability. In addition, the content of volatile organic compounds (VOCs) is in principle very low and results in low-emission coatings which are not harmful to health. In some applications, such as, for example, in the case of coatings for automotive interiors, particularly low emissions are required because of legal or technical standards (see e.g. VDA 278). Depending on the composition of the polyurethane, polyurethane coatings having different elasticity and hardness are obtained, it being possible, as is known, to customise those properties *via* the ratio of polyisocyanate to polyol, the structure of the polyol and of the polyisocyanate, and the molar mass of the polyol. For coatings on flexible substrates, such as, for example, elastomers, leather, textiles and glass fibres, PUDs whose films have an elongation > 500% and whose soft segment is not crystallisable are very frequently used in order to ensure adequate low-temperature flexibility.

Such PUDs are frequently synthesised on the basis of polyester diols, which in turn are obtainable by polycondensation of dicarboxylic acids with dialcohols. For economic reasons, adipic acid and/or phthalic acid are frequently used as the dicarboxylic acid and reacted with one or more different dialcohols at elevated temperature with the cleavage of water. However, intramolecular condensation products, so-called ring esters, are formed as by-products; they do not contain any groups reactive towards polyisocyanates but, on account of their thermophysical properties, they can contribute towards the total emissions of a coating.

There are many examples of aqueous polyurethane urea dispersions based on amorphous polyester polyols which can be used for such applications (see e.g. US20070049684, EP2254923, EP1027381), but no details are to be found regarding the content of ring esters.

US5961906 discloses polyurethane urea dispersions based on polyester polyol which have an ultimate elongation of > 300%, wherein the polyester polyol is based on adipic acid and/or succinic acid. No information is available regarding the presence of ring esters, and the resulting polyurethanes are so designed that they are as biodegradable as possible, which represents a major disadvantage when used as textile coating compositions because the coating does not have longevity.

EP729483 discloses low-fogging polyester-based polyurethane foams, wherein the polyester polyols are so composed that no ring esters having a size of from 12 to 14 atoms can form. The polyester polyols always consist of a proportion of adipic acid and contain pentaerythritol as a chain-extension component, as a result of which the functionality becomes markedly > 2, which makes it impossible to use these polyols in the preparation of polyurethane urea dispersions owing to excessive crosslinking.

It was an object of the present invention to provide aqueous polyurethane urea dispersions which, when used in coating compositions, are suitable for the coating of flexible substrates and at the same time have a low content of ring esters.

Surprisingly, the object of the present invention has been achieved in that aqueous polyurethane urea dispersions are composed of amorphous polyester diols, which in turn are composed of succinic acid and at least two different dihydroxy compounds. The aqueous polyurethane urea dispersion contain polyurethane urea polymers composed of
a) from 5 to 40 wt.% of at least one aliphatic or aromatic polyisocyanate having a functionality ≥ 2,
b) from 40 to 90 wt.% of at least one amorphous polyester polyol having a functionality ≥ 2 and a number-average molar mass Mₙ of from 400 to 8000 g/mol, composed of succinic acid and at least two different dihydroxy compounds whose carbon skeleton contains from 2 to 12 carbon atoms,
c) from 0.1 to 5 wt.% of at least one isocyanate-reactive compound having a functionality ≥ 2 which contains potentially ionic groups,
d) from 0.1 to 17 wt.% of at least one polyamine having a molar mass M of from 32 to 400 g/mol and a functionality of from 1 to 3,
e) optionally from 0 to 15 wt.% of at least one non-ionic, isocyanate-reactive hydrophilising agent,
f) optionally from 0 to 7.0 wt.% of at least one polyhydroxy compound having a molar mass < 400 g/mol and a functionality of from 2 to 4,
g) optionally from 0 to 8.0 wt.% of at least one neutralising agent for neutralising the potentially ionic groups of component c),
wherein the sum of components a) to g) is 100 wt.%.

Preference is given to polyurethane urea polymers composed of
a) from 7.5 to 40 wt.% of at least one aliphatic or aromatic polyisocyanate having a functionality ≥ 2,
b) from 45 to 85 wt.% of at least one polyester polyol having a functionality 2 and a number-average molar mass Mₙ of from 400 to 8000 g/mol, composed of succinic acid and at least two different dihydroxy compounds whose carbon skeleton contains from 2 to 12 carbon atoms,
c) from 0.4 to 4.5 wt.% of at least one isocyanate-reactive compound having a functionality ≥ 2 which contains potentially ionic groups,
d) from 0.25 to 15 wt.% of at least one polyamine having a molar mass of from 32 to 400 g/mol and a functionality of from 1 to 3,
e) optionally from 0 to 15 wt.% of at least one non-ionic, isocyanate-reactive hydrophilising agent,
f) optionally from 0 to 7.0 wt.% of at least one polyhydroxy compound having a molar mass ₙ < 400 g/mol and a functionality of from 2 to 4,
g) optionally from 0 to 8.0 wt.% of at least one neutralising agent for neutralising the potentially ionic groups of component c),
wherein the sum of components a) to g) is 100 wt.%.

Particular preference is given to polyurethane urea polymers composed of
a) from 10 to 30 wt.% of at least one aliphatic or aromatic polyisocyanate having a functionality ≥ 2,
b) from 50 to 80 wt.% of at least one polyester polyol having a functionality 2 and a number-average molar mass Mₙ of from 400 to 8000 g/mol, composed of succinic acid and at least two different dihydroxy compounds whose carbon skeleton contains from 2 to 12 carbon atoms,
c) from 0.75 to 4.0 wt.% of at least one isocyanate-reactive compound having a functionality ≥ 2 which contains potentially ionic groups,
d) from 0.7 to 12 wt.% of at least one polyamine having a molar mass of from 32 to 400 g/mol and a functionality of from 1 to 3,
e) optionally from 0 to 15 wt.% of at least one non-ionic, isocyanate-reactive hydrophilising agent,
f) optionally from 0 to 7.0 wt.% of at least one polyhydroxy compound having a molar mass < 400 g/mol and a functionality of from 2 to 4,
g) optionally from 0 to 8.0 wt.% of at least one neutralising agent for neutralising the potentially ionic groups of component c),
wherein the sum of components a) to g) is 100 wt.%.

The number-average molar mass Mₙ of the polyester polyols is determined by gel permeation chromatography against a polystyrene standard in tetrahydrofuran at 23°C.

The polyester polyol used according to the invention is preferably amorphous. Preferably, it has a glass transition temperature Tg in the range from -80°C to 0°C, particularly preferably in the range from -70°C to -10°C, determined by DSC measurement according to DIN 65467 at a heating rate of 20 K/minute.

Suitable polyisocyanates a) are the aromatic, araliphatic, aliphatic or cycloaliphatic polyisocyanates known *per se* to the person skilled in the art. Suitable polyisocyanates a) are, for example, 1,4-butylene diisocyanate, 1,5-pentamethylene diisocyanate, 1,6-hexamethylene diisocyanate (HDI), isophorone diisocyanate (IPDI), 2,2,4- and/or 2,4,4-trimethylhexamethylene diisocyanate, the isomeric bis-(4,4'-isocyanatocyclohexyl)methanes or mixtures thereof of any desired isomer content, 1,4-cyclohexylene diisocyanate, 1,4-phenylene diisocyanate, 2,4- and/or 2,6-toluene diisocyanate or hydrogenated 2,4- and/or 2,6-toluene diisocyanate, 1,5-naphthalene diisocyanate, 2,4'- or 4,4'-diphenylmethane diisocyanate, 1,3- and 1,4-bis-(2-isocyanato-prop-2-yl)-benzene (TMXDI), 1,3-bis(isocyanatomethyl)benzene (XDI), (S)-alkyl 2,6-diisocyanatohexanoates or (L)-alkyl 2,6-diisocyanatohexanoates.

The proportionate use of polyisocyanates having a functionality > 2 is also possible. These include modified diisocyanates having a uretdione, isocyanurate, urethane, allophanate, biuret, iminooxadiazinedione and/or oxadiazinetrione structure, as well as unmodified polyisocyanates having more than 2 NCO groups per molecule, for example 4-isocyanatomethyl-1,8-octaue diisocyanate (nonane triisocyanate) or triphenylmethane-4,4',4"-triisocyanate.

Preference is given to polyisocyanates or polyisocyanate mixtures of the above-mentioned type having solely aliphatically and/or cycloaliphatically bonded isocyanate groups having a mean functionality of from 2 to 4, preferably from 2 to 2.6 and particularly preferably from 2 to 2.4.

Polyester polyols which can be used as compounds b) have a number-average molecular weight Mₙ of from 400 to 8000 g/mol, preferably from 400 to 6000 g/mol and particularly preferably from 400 to 3000 g/mol. The number-average molecular weight Mₙ of the polyester polyols is determined by gel permeation chromatography against a polystyrene standard in tetrahydrofuran at 23°C. Their hydroxyl number according to DIN ISO 4629 is from 22 to 400 mg KOH/g, preferably from 30 to 300 mg KOH/g and particularly preferably from 40 to 250 mg KOH/g, and they have an OH functionality of from 1 to 6, preferably from 1.5 to 4.0, particularly preferably from 1.9 to 2.1.

The polyester polyols b) are prepared according to the prior art preferably by polycondensation from succinic acid, succinic anhydride and/or succinic acid esters with two different dihydroxy compounds having molar masses of from 62 to 300 g/mol, having from 2 to 12 carbon atoms and functionalities of at least 2, which can be branched or unbranched and the hydroxyl groups of which are primary or secondary. The dihydroxy compounds can also contain ether groups. Preferably, the dihydroxy compounds are selected from the group consisting of ethylene glycol, 1,2-propanediol, 1,3-propanediol, 1,4-butanediol, 2,3-butanediol, 2-methyl-1,3-propanediol, 1,5-pentanediol, neopentyl glycol, 1,6-hexanediol, 3-methyl-1,5-pentanediol, 1,8-octanediol, 1,10-decanediol, 1,2-dodecanediol, diethylene glycol, triethylene glycol, dipropylene glycol, tripropylene glycol and oligo-tetrahydrofurans having hydroxyl end groups. Particularly preferably, the two dihydroxy compounds are selected from diols having a carbon skeleton of from three to six carbon atoms, most particularly preferably from the group consisting of hexanediol, neopentyl glycol and 1,3-propanediol.

The molar mixing ratio of the two dihydroxy compounds is chosen so that the resulting polyester is amorphous. An amorphous polyester does not show any melting or crystallisation peak or a crystallisation peak that is related to a melt enthalpy ΔₘH < 10 J/g the DSC measurement according to DIN 65467.

The preparation of the polyester polyols b) is carried out according to the prior art at elevated temperature in the range from 150 to 250°C and with the application of a vacuum of from 1 to 100 mbar and/or under a stream of nitrogen, optionally using an esterification or transesterification catalyst, the reaction being completed to such an extent that the acid number according to DIN EN ISO 2114 is below a value of 5 mg KOH/g.

Succinic acid for the preparation of component b) can be obtained both from petrochemical raw materials and from regenerative and renewable sources, the preparation process frequently proceeding *via* a fermentation process of starch or biomass, as disclosed, for example, in DE 10 2008 051727 A1 and DE 10 2007 019184.

Component c) contains potentially ionic groups, which can be of either cationic or anionic nature. Compounds having a cationic, anionic or non-ionic dispersing action are those which contain, for example, sulfonium, ammonium, phosphonium, carboxylate, sulfonate, phosphonate groups or groups which can be converted into the above-mentioned groups by salt formation (potentially ionic groups) or polyether groups and can be incorporated into the macromolecules by isocyanate-reactive groups that are present. Preferred suitable isocyanate-reactive groups are hydroxyl and amine groups.

Suitable ionic or potentially ionic compounds c) are, for example, mono- and di-hydroxycarboxylic acids, mono- and di-aminocarboxylic acids, mono- and di-hydroxysulfonic acids, mono- and di-aminosulfonic acids as well as mono- and di-hydroxyphosphonic acids or mono- and di-aminophosphonic acids and their salts, such as dimethylolpropionic acid, dimethylolbutyric acid, hydroxypivalic acid, N-(2-aminoethyl)-β-alanine, 2-(2-amino-ethylamino)-ethanesulfonic acid, ethylenediamine-propyl- or -butyl-sulfonic acid, 1,2- or 1,3-propylenediamine-β-ethylsulfonic acid, malic acid, citric acid, glycolic acid, lactic acid, glycine, alanine, taurine, lysine, 3,5-diaminobenzoic acid, an addition product of IPDI and acrylic acid (EP-A 0 916 647, Example 1) and its alkali and/or ammonium salts; the adduct of sodium bisulfite with 2-butene-1,4-diol, polyether sulfonate, the propoxylated adduct of 2-butenediol and NaHSO3 described, for example, in DE-A 2 446 440 (pages 5-9, formulae I-III), as well as structural units which can be converted into cationic groups, such as N-methyl-diethanolamine as hydrophilic chain-extension components. Preferred ionic or potentially ionic compounds are those which have carboxy or carboxylate and/or sulfonate groups and/or ammonium groups and have a functionality of from 1.9 to 2.1. Particularly preferred ionic compounds have an amine functionality of from 1.9 to 2.1 and contain sulfonate groups as ionic or potentially ionic groups, such as the salts of N-(2-aminoethyl)-β-alanine, of 2-(2-amino-ethylamino)-ethanesulfonic acid or of the addition product of IPDI and acrylic acid (EP-A 0 916 647, Example 1).

The polyamines d) used for the chain extension preferably have a functionality of from 1 to 2 and are, for example, di- or poly-amines as well as hydrazides, for example ethylenediamine, 1,2- and 1,3-diaminopropane, 1,4-diaminobutane, 1,6-diaminohexane, isophoronediamine, isomer mixture of 2,2,4- and 2,4,4-trimethylhexamethylenediamine, 2-methylpentamethylenediamine, diethylenetriamine, 1,3- and 1,4-xylylenediamine, α,α,α',α'-tetramethyl-1,3- and -1,4-xylylenediamine and 4,4-diaminodicyclohexylmethane, dimethylethylenediamine, hydrazine or adipic acid dihydrazide.

There come into consideration as component d) in principle also compounds that contain active hydrogen of differing reactivity towards NCO groups, such as compounds which contain, in addition to a primary amino group, also secondary amino groups or, in addition to an amino group (primary or secondary), also OH groups. Examples thereof are primary/secondary amines, such as 3-amino-1-methylaminopropane, 3-amino-1-ethylamino-propane, 3-amino-1-cyclohexylaminopropane, 3-amino-1-methylaminobutane, also alkanolamines such as N-aminoethylethanolamine, ethanolamine, 3-aminopropanol or neopentanolamine.

Preference is given to diethanolamine and/or hydrazine and/or isophoronediamine (IPDA) and/or ethylenediamine. Particular preference is given to hydrazine and/or isophoronediamine and/or ethylenediamine. Most particular preference is given to a mixture of hydrazine and IPDA.

Suitable compounds e) having a non-ionically hydrophilising action are, for example, polyoxyalkylene ethers which contain at least one hydroxy or amino group. Such polyethers contain an amount of from 30 wt.% to 100 wt.% structural units derived from ethylene oxide. There are suitable linear polyethers having a functionality of from 1 to 2, but also compounds of the general formula (I) 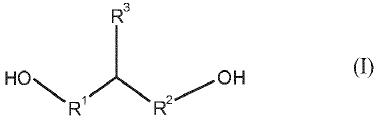 in which
- R¹ and R²: each independently of the other denotes a divalent aliphatic, cycloaliphatic or aromatic radical having from 1 to 18 carbon atoms, which can be interrupted by oxygen and/or nitrogen atoms, and
- R³: represents an alkoxy-terminated polyethylene oxide radical.

Compounds e) having a non-ionically hydrophilising action are, for example, also monohydric polyalkylene oxide polyether alcohols having, in the statistical mean, from 5 to 70, preferably from 7 to 55, ethylene oxide units per molecule, as are obtainable in a manner known *per se* by alkoxylation of suitable starter molecules (e.g. in Ullmanns Encyclopädie der techmischen Chemie, 4th Edition, Volume 19, Verlag Chemie, Weinheimp. 31-38).

Suitable starter molecules are, for example, saturated monoalcohols such as methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n-octadecanol, cyclohexanol, the isomeric methylcyclohexanols or hydroxymethylcyclohexane, 3-ethyl-3-hydroxymethyloxetan or tetrahydrofurfuryl alcohol, diethylene glycol monoalkyl ethers such as, for example, diethylene glycol monobutyl ether, unsaturated alcohols such as allyl alcohol, 1,1-dimethylallyl alcohol or oleic alcohol, aromatic alcohols such as phenol, the isomeric cresols or methoxyphenols, araliphatic alcohols such as benzyl alcohol, anis alcohol or cinnamic alcohol, secondary monoamines such as dimethylamine, diethylamine, dipropylamine, diisopropylamine, dibutylamine, bis-(2-ethylhexyl)-amine, N-methyl- and N-ethyl-cyclohexylamine or dicyclohexylamine as well as heterocyclic secondary amines such as morpholine, pyrrolidine, piperidine or 1H-pyrazole. Preferred starter molecules are saturated monoalcohols. Particular preference is given to the use of diethylene glycol monobutyl ether as starter molecule.

Alkylene oxides suitable for the alkoxylation reaction are in particular ethylene oxide and propylene oxide, which can be used in the alkoxylation reaction in any desired sequence or alternatively in admixture.

The number-average molar mass Mₙ of the alkylene oxides is from 300 g/mol to 6000 g/mol, preferably from 500 g/mol to 4000 g/mol and particularly preferably from 750 g/mol to 3000 g/mol, with a functionality of 1. The number-average molecular weight Mₙ of the alkylene oxides is determined by gel permeation chromatography against a polystyrene standard in tetrahydrofuran at 23°C.

Suitable non-ionically hydrophilising, monofunctional compounds e) of that type are, for example, monofunctional alkoxypolyethylene glycols such as, for example, methoxypolyethylene glycols (MPEG Carbowax^{®} 2000 or Methoxy PEG-40, molecular weight range 1800 to 2200, The Dow Chemical Company), monofunctional polyether monoalkyl ethers such as, for example, LB 25 composed of butanol and ethylene oxide as well as propylene oxide, having a mean molar mass Mₙ of 2250 g/mol from Bayer MaterialScience, monofunctional polyether amines (Jeffamine^{®} M 1000, PO/EO molar ratio 3/19 and M 2070, PO/EO molar ratio 10/31, Huntsman Corp.).

There are preferably used as compound e) MPEG Carbowax^{®} 2000, LB 25 or Jeffamine^{®} M 2070. MPEG Carbowax^{®} 2000 or LB 25 are particularly preferred.

The low molecular weight polyols f) which can optionally be used in the formation of the polyurethane resins generally bring about stiffening and/or branching of the polymer chain. The molecular weight is preferably from 62 to 200 and their functionality is preferably from 2 to 3. Suitable polyols c) can contain aliphatic, alicyclic or aromatic groups. Mention may be made here, for example, of the low molecular weight polyols having up to about 20 carbon atoms per molecule, such as, for example, ethylene glycol, diethylene glycol, triethylene glycol, 1,2-propanediol, 1,3-propanediol, 1,4-butanediol, 1,3-butylene glycol, cyclohexanediol, 1,4-cyclohexanedimethanol, 1,6-hexanediol, hydroquinone dihydroxyethyl ether, bisphenol A (2,2-bis(4-hydroxyphenyl)propane), hydrogenated bisphenol A (2,2-bis(4-hydroxycyclohexyl)propane) as well as mixtures thereof, as well as trimethylolpropane, glycerol or pentaerythritol. It is also possible to use ester diols such as, for example, δ-hydroxybutyl-δ-hydroxy-caproic acid ester, ω-hydroxyhexyl-γ-hydroxybutyric acid ester, adipic acid (β-hydroxyethyl) ester or terephthalic acid bis(β-hydroxyethyl) ester. Particular preference is given to hexanediol and/or trimethylolpropane and/or butanediol.

The neutralising agents g) which are optionally to be used for neutralising the potentially ionic groups c) are after or during the preparation of the polyurethane prepolymers from a), b) and c) if it does not contain amino groups as well as optionally from e) and f), if this has not already been carried out in the starting molecules, the partial or complete salt formation of the groups having anionically and/or cationically dispersing action. In the case of anionic groups, there are used for that purpose bases such as ammonia, ammonium carbonate or hydrogen carbonate, trimethylamine, triethylamine, tributylamine, diisopropylethylamine, dimethylethanolamine, diethylethanolamine, triethanolamine, potassium hydroxide or sodium carbonate, preferably triethylamine, triethanolamine, dimethylethanolamine or diisopropylethylamine. The amount of base is from 50 to 100%, preferably from 60 to 90%, of the amount of anionic groups. In the case of cationic groups, sulfuric acid dimethyl ester or succinic acid is used. If only non-ionically hydrophilised compounds with ether groups are used, the neutralisation step is omitted. The neutralisation can also be carried out at the same time as the dispersion if the dispersing water already contains the neutralising agent.

The preparation of the aqueous polyurethane dispersion can be carried out in one or more stages in homogeneous phase or, in the case of a multi-stage reaction, partly in disperse phase. When the polyaddition has been carried out completely or partially, a dispersing, emulsifying or dissolving step takes place. A further polyaddition or modification in disperse phase is then optionally carried out.

All the processes known from the prior art can be used for the preparation of the polyurethane urea dispersions according to the invention, such as the emulsifier/shear force, acetone, prepolymer mixing, melt emulsification, ketimine and solids spontaneous dispersion processes or derivatives thereof. A summary of these methods is to be found in Methoden der organischen Chemie (Houben-Weyl, Erweiterungs- und Folgebände zur 4. Auflage, Volume E20, H. Bartl and J. Falbe, Stuttgart, New York, Thieme 1987, p. 1671-1682). The melt emulsification and the acetone process are preferred. The acetone process is particularly preferred.

Usually, all or some of constituents a) to g), which do not contain primary or secondary amino groups, and one or more polyisocyanates a) are placed in the reactor in order to prepare a polyurethane prepolymer and, optionally diluted with a solvent that is miscible with water but inert towards isocyanate groups, but preferably without a solvent, heated to elevated temperatures, preferably in the range of from 50 to 120°C.

Suitable solvents are, for example, acetone, butanone, ethyl acetate, tetrahydrofuran, dioxane, acetonitrile, dipropylene glycol dimethyl ether and 1-methyl-2-pyrrolidone, which can be added not only at the beginning of the preparation but also later, optionally in portions. Acetone and butanone are preferred. It is possible to carry out the reaction under normal pressure or elevated pressure, for example above the normal pressure boiling temperature of a solvent that is optionally added, such as, for example, acetone.

The catalysts known for accelerating the isocyanate addition reaction, such as, for example, triethylamine, 1,4-diazabicyclo-[2,2,2]-octane, tin dioctoate or dibutyltin dilaurate, can further be placed in the reaction vessel at the same time or added later. Dibutyltin dilaurate is preferred.

Any constituents (a) and/or b) to f), which do not contain primary or secondary amino groups, which were not added at the beginning of the reaction are then metered in. The ratio of isocyanate groups to isocyanate-reactive groups in the preparation of the polyurethane prepolymer is from 0.90 to 4.00, preferably from 1.20 to 3.00, particularly preferably from 1.40 to 2.50. The reaction of components a) with b), c), e) and f) is carried out, based on the total amount of isocyanate-reactive groups, partially or completely, but preferably completely. The degree of conversion is usually monitored by following the NCO content of the reaction mixture. To that end, both spectroscopic measurements, for example infrared or near-infrared spectra, determinations of the refractive index and chemical analyses, such as titrations, of removed samples can be carried out. Polyurethane prepolymers containing free isocyanate groups are obtained without a solvent or in solution.

Then, in a further process step, if this has not yet been carried out or has been carried out only partially, the resulting prepolymer is dissolved with the aid of the above-mentioned solvents.

Possible NH₂- and/or NH-functional components c) and d) are then reacted with the remaining isocyanate groups. This chain extension/termination can be carried out either in solvents prior to the dispersion, during the dispersion or in water after the dispersion. Preferably, the chain extension is carried out prior to the dispersion in water.

The degree of chain extension, that is to say the equivalent ratio of NCO-reactive groups of the compounds used for the chain extension to free NCO groups of the prepolymer is from 40 to 100%, preferably from 60 to 100%, particularly preferably from 70 to 100%.

The amine components c) and d), optionally in solution in water or in a solvent, can be used in the process according to the invention individually or in mixtures, any sequence of addition being possible in principle.

When water or organic solvents are used concomitantly as diluents, the diluent content is preferably from 70 to 95 wt.%.

The preparation of the polyurethane urea dispersion according to the invention from the prepolymers is carried out following the chain extension. To that end, the dissolved and chain-extended polyurethane polymer, optionally with pronounced shear, such as, for example, vigorous stirring, is introduced into the dispersing water or, conversely, the dispersing water is stirred into the polymer solutions. Preferably, the water is added to the dissolved prepolymer.

The solvent still contained in the dispersions after the dispersing step is usually subsequently removed by distillation. Removal during the dispersion is likewise possible.

The solids content of the polyurethane polyurea dispersion according to the invention is from 20 to 70 wt.%, preferably from 30 to 65 wt.% and particularly preferably from 32 to 62 wt.%.

The invention further provides the use of the polyurethane polyurea dispersions according to the invention in the production of coating compositions for flexible substrates such as, for example, textiles, leather, paper as well as fibres, such as, for example, glass fibres, plastics fibres and graphite fibres, preferably in the production of textile coatings.

The aqueous coating compositions containing the polyurethane polyurea dispersions according to the invention can contain auxiliary substances and additives as a further component. Such auxiliary substances and additives can be cobinders, thickeners, adhesion promoters, lubricants, wetting additives, colourings, light stabilisers and anti-ageing agents, pigments, flow agents, anti-statics, UV absorbers, film-forming aids, anti-foams or plasticisers.

The polyurethane polyurea dispersions according to the invention can be used as a constituent in water-based lacquers for the coating of flexible surfaces. For that purpose, the polyurethane polyurea dispersions according to the invention can be mixed with further aqueous resin dispersions, such as, for example, aqueous dispersions based on polyester, polyurethane, polyurethane polyacrylate, polyacrylate, polyether, polyester polyacrylate, alkyd resin, polyamide/imide or polyepoxide.

The coating can be produced by the various spraying methods such as, for example, compressed air, airless or electrostatic spraying methods using one- or optionally two-component spraying systems. The lacquers and coating compositions containing the polyurethane polyurea dispersions according to the invention can, however, also be applied by other methods, for example by spread coating, roller coating, spraying, dipping, printing or doctor blade application.

### Examples:

### Raw materials and methods:

- LB 25:: Monofunctional polyether based on ethylene oxide/propylene oxide having an ethylene oxide content of 84%, OH number 25, Mₙ = 2250 g·mol⁻¹ (Bayer MaterialScience AG, DE).
- IPDI:: Desmodur^{®} I, isophorone diisocyanate (Bayer MaterialScience AG, DE).
- HDI:: Desmodur^{®} H, 1,6-hexamethylene diisocyanate (Bayer MaterialScience AG, DE).
- IPDA:: Isophoronediamine (Bayer MaterialScience AG, DE).
- AAS:: Diaminosulfonate, 45% in water, H₂N-CH₂-CH₂-NH-CH₂-CH₂-SO₃Na (Bayer MaterialScience AG, DE).
- HyHy:: Hydrazine hydrate (Bayer MaterialScience AG, DE).
- NPG:: Neopentyl glycol (Aldrich, DE)
- HXDO:: 1,6-Hexanediol (Aldrich, DE)
- BDO:: 1,4-Butanediol (Aldrich, DE)
- TMP:: Trimethylolpropane (Aldrich, DE)
- EDA:: Ethylenediamine (Aldrich, DE)
- DMPS:: Dimethylolpropionic acid (Aldrich, DE)
- TEA:: Triethylamine (Aldrich, DE)
- Impranil DLS:: Polyurethane urea dispersion based on an adipate with hexanediol and neopentyl glycol
- Impranil DL 1537: Polyurethane urea dispersion based on a phthalate with hexanediol
- Impranil DL 1554: Polyurethane urea dispersion based on an adipate with hexanediol and neopentyl glycol
- Adipic acid:: 1,6-Hexanedioic acid (Lanxess, DE)
- Succinic acid: 1,4-Butanedioic acid (petrochemical production process, Aldrich, DE)
- Bio-succinic acid: 1,4-Butanedioic acid (fermentative production process, DSM-Roquette, NL-FR)
- 1,3-Propanediol: (fermentative production process, DuPont, USA)
- SnCl₂x2H₂O: Tin(II) dichloride dihydrate (Aldrich, DE)

The mechanical properties of the PU dispersions are determined on free films, which are prepared as follows:
In a film-drawing device consisting of two polished rollers the spacing of which can be set exactly, a release paper is placed in front of the rear roller. Using a feeler gauge, the spacing between the paper and the front roller is adjusted. That spacing corresponds to the film thickness (wet) of the resulting coating and can be adjusted to the desired thickness of each coat. Coating is also possible consecutively in a plurality of coats.
In order to apply the individual coats, the products, after adjustment of the viscosity to 4500 mPa·s by addition of anionic acrylic polymer are poured into the gap between the paper and the front roller; the release paper is pulled away vertically downwards, the corresponding film forming on the paper. If a plurality of coats is to be applied, each individual coat is dried and the paper is inserted again.

The solids contents were determined according to DIN-EN ISO 3251.

Unless expressly indicated otherwise, NCO contents were determined volumetrically according to DIN-EN ISO 11909.

The mechanics of these film samples are determined according to DIN 53504 after 24 hours' storage under normal climatic conditions (20°C and 65% atmospheric humidity). The mechanical film properties are determined after drying for 30 minutes at 150°C.

Determination of the ring esters was carried out according to VDA 278, the deposited impurities being determined structurally by means of gas chromatography/mass spectroscopy.

The glass transition temperature was determined by means of dynamic differential calorimetry (DSC, DSC-7 device, Perkin Elmer) with a heating rate of 20 K/min.

The mean particle sizes were determined by means of photocorrelation spectroscopy (Malvern Instruments, type: Zetasizer 1000).

The acid numbers were determined according to DIN EN ISO 2114.

The hydroxyl numbers were determined according to DIN ISO 4629.

### Preparation of the polyester polyols

### Polyol a)

1747 g of 1,6-hexanediol, 1019 g of NPG, 0.14 g of SnCl₂x2H₂O are placed in a 5-litre stainless steel reactor equipped with a stirrer and a distillation bridge and heated to 100°C under a stream of nitrogen (5-6 litres/hour). A liquid, stirrable melt is thereby obtained and is homogenised at 500 revolutions per minute (rpm) by means of an anchor agitator. 2494 g of succinic acid are added to the resulting mixture. The stirring speed is then increased to 150 rpm and nitrogen is passed into the reaction mixture at a flow rate of 10-12 litres/hour. The reaction temperature is increased to 220°C so that the temperature measured in the distillation bridge does not exceed 102°C. Stirring is carried out at that temperature until the removed samples have an acid number (measured according to DIN EN ISO 2114) < 5 mg KOH/g substance (about 15 hours). 4328 g of a clear, colourless liquid that is highly viscous at room temperature and has an OH number of 70 mg KOH/g substance and an acid number of 2.6 mg KOH/g substance are obtained.

The polyol is completely amorphous and has a glass transition temperature at -49.5°C.

### Polyol b)

The procedure is analogous to the preparation procedure for **Polyol a)**, except that

1305 g of 1,3-propanediol, 1183 g of NPG, 0.14 g of SnCl₂x2H₂O and 2894 g of succinic acid are reacted in the course of about 30 hours to give 3897 g of a clear, slightly yellowish polyester diol that is highly viscous at room temperature and has an OH number of 75 mg KOH/g substance and an acid number of 2.8 mg KOH/g substance.

The polyol is completely amorphous and has a glass transition temperature at -37.0°C.

### Polyol c)

The procedure is analogous to the preparation procedure for **Polyol a),** except that, in a 15-litre steel reactor, with a nitrogen flow of initially 15-16 litres/hour at 100°C and then of 30-32 litres/hour at 220°C and with a stirring speed of 50 rpm,

5241 g of 1,6-hexanediol, 3057 g of NPG, 0.41 g of SnCl₂x2H₂O and 7482 g of bio-succinic acid are reacted in the course of about 13 hours to give 13,110 g of a clear, colourless polyester diol that is highly viscous at room temperature and has an OH number of 79 mg KOH/g substance and an acid number of 2.4 mg KOH/g substance.

The polyol is completely amorphous and has a glass transition temperature at -48.4°C.

### Preparation of the PU dispersions according to the invention:

### Example 1 (according to the invention)

44.8 g of HDI and 59.2 g of IPDI are added at 50°C to 269.4 g of polyester polyol b), 13.5 g of the monofunctional hydrophilising agent LB25 and 5.8 g of NPG and then reacted at 100°C to the prepolymer until the theoretical NCO value (NCO-1 = 6.31%) is reached. 698 g of acetone are then added at 80°C, the mixture is cooled to 40°C, and the prepolymer is dissolved. A chain-extending solution of 35.3 g of IPDA, 12.5 g of AAS and 1.2 g of HyHy in 50 g of water is added, and stirring is carried out for 5 minutes at 40°C. The product is dispersed in 594 g of water, and then the acetone is distilled off at 120 mbar and 40°C. An aqueous dispersion having a solids content of 41.1 wt.% with a pH value of 7.1 and a mean particle size of 560 nm is obtained.

### Example 2 (according to the invention)

131.8 g of IPDI are added at 50°C to 270.6 g of polyester polyol a) and 14.6 g of the monofunctional hydrophilising agent LB25 and then reacted at 100°C to the prepolymer until the theoretical NCO value (NCO-1 = 10.38%) is reached. 5.9 g of TMP and 5.9 g of BDO are then added until the prepolymer has reached the second NCO value (NCO-2 = 6.09%). 760 g of acetone are then added at 80°C, the mixture is cooled to 40°C, and the prepolymer is dissolved. A chain-extending solution of 14.9 g of AAS and 12.6 g of EDA in 130 g of water is added, and stirring is carried out for 5 minutes at 40°C. The product is dispersed in 530 g of water, and then the acetone is distilled off at 120 mbar and 40°C. An aqueous dispersion having a solids content of 42.7 wt.% with a pH value of 7.0 and a mean particle size of 235 nm is obtained.

### Example 3 (according to the invention)

42.7 g of IPDI and 32.2 g of HDI are added at 50°C to 306.6 g of polyester polyol a) and 9.7 g of the monofunctional hydrophilising agent LB25 and then reacted at 100°C to the prepolymer until the theoretical NCO value (NCO-1 = 4.56%) is reached. 695 g of acetone are then added at 80°C, the mixture is cooled to 40°C, and the prepolymer is dissolved. A chain-extending solution of 25.4 g of IPDA, 9.0 g of AAS and 0.9 g of HyHy in 36 g of water is added, and stirring is carried out for 5 minutes at 40°C. The product is dispersed in 590 g of water, and then the acetone is distilled off at 120 mbar and 40°C. An aqueous dispersion having a solids content of 43.4 wt.% with a pH value of 7.6 and a mean particle size of 220 nm is obtained.

### Example 4 (according to the invention)

60.1 g of HDI are added at 50°C to 362 g of polyester polyol a) and then reacted at 100°C to the prepolymer until the theoretical NCO value (NCO-1 = 3.14%) is reached. 750 g of acetone are then added at 80°C, the mixture is cooled to 40°C, and the prepolymer is dissolved. A chain-extending solution of 22.6 g of AAS and 3.5 g of EDA in 88 g of water is added, and stirring is carried out for 5 minutes at 40°C. The product is dispersed in 550 g of water, and then the acetone is distilled off at 120 mbar and 40°C. An aqueous dispersion having a solids content of 42.1 wt.% with a pH value of 6.8 and a mean particle size of 120 nm is obtained.

### Example 5 (according to the invention)

49.8 g of IPDI and 37.6 g of HDI are added at 50°C to 284.3 g of polyester polyol c) and 11.3 g of the monofunctional hydrophilising agent LB25 and then reacted at 100°C to the prepolymer until the theoretical NCO value (NCO-1 = 5.44%) is reached. 680 g of acetone are then added at 80°C, the mixture is cooled to 40°C, and the prepolymer is dissolved. A chain-extending solution of 29.6 g of IPDA, 10.5 g of AAS and 1.0 g of HyHy in 42 g of water is added, and stirring is carried out for 5 minutes at 40°C. The product is dispersed in 580 g of water, and then the acetone is distilled off at 120 mbar and 40°C. An aqueous dispersion having a solids content of 41.9 wt.% with a pH value of 7.1 and a mean particle size of 175 nm is obtained.

### Example 6 (according to the invention)

53.7 g of HDI and 71.1 g of IPDI are added at 50°C to 223.2 g of polyester polyol a), 16.2 g of the monofunctional hydrophilising agent LB25 and 15.8 g of HXDO and then reacted at 100°C to the prepolymer until the theoretical NCO value (NCO-1 = 7.83%) is reached. 675 g of acetone are then added at 80°C, the mixture is cooled to 40°C, and the prepolymer is dissolved. A chain-extending solution of 42.3 g of IPDA, 15.0 g of AAS and 1.4 g of HyHy in 60 g of water is added, and stirring is carried out for 5 minutes at 40°C. The product is dispersed in 575 g of water, and then the acetone is distilled off at 120 mbar and 40°C. An aqueous dispersion having a solids content of 41.4 wt.% with a pH value of 7.1 and a mean particle size of 175 nm is obtained.

### Example 7 (according to the invention)

115.4 g of IPDI and 9.7 g of HDI are added at 50°C to 273.3 g of polyester polyol a) and 14.1 g of DMPS and then reacted at 100°C to the prepolymer until the theoretical NCO value (NCO-1 = 6.55%) is reached. 730 g of acetone are then added at 80°C, the mixture is cooled to 40°C, and the prepolymer is dissolved. 10.6 g of TEA are then added for neutralisation. A chain-extending solution of 37.2 g of IPDA in 272 g of acetone is added and stirring is carried out for 5 minutes, and then 2.7 g of HyHy in 11.9 g of water are added and stirring is carried out for a further 5 minutes. The product is dispersed in 680 g of water, and then the acetone is distilled off at 120 mbar and 40°C. An aqueous dispersion having a solids content of 40.6 wt.% with a pH value of 7.7 and a mean particle size of 320 nm is obtained.

**Table 1: Determination of the ring ester content in free films of chosen examples; the determination was carried out according to VDA 278**

| Example | Ultimate elongation / % | Size of ring ester 1 / atoms | Size of ring ester 2 / atoms | VOC ring ester 1 / ppm | VOC ring ester 2 / ppm |
|---|---|---|---|---|---|
| Impranil DLS* | 1000 | 14 | 11 | 354 | 81 |
| Impranil DL 1537* | 1200 | 12 | / | 95 | / |
| Impranil DL 1554 | 1000 | 14 | 11 | 76 | 27 |
| Example 1 | 710 | 12 | 9 | / | / |
| Example 2 | 720 | 12 | 9 | / | / |
| Example 3 | 1400 | 12 | 9 | 20 | 5 |
| Example 4 | 2700 | 12 | 9 | / | / |
| Example 5 | 1200 | 12 | 9 | 5 | 0 |
| Example 6 | 770 | 12 | 9 | / | / |
| Example 7 | 560 | 12 | 9 | / | / |

It is clear that only the examples according to the invention have a significantly lower content of ring esters with a corresponding ultimate elongation, the size of the ring esters is not important.

## Claims

1. Aqueous polyurethane urea dispersion containing polyurethane urea polymers composed of
a) from 5 to 40 wt.% of at least one aliphatic or aromatic polyisocyanate having a functionality 2,
b) from 40 to 90 wt.% of at least one amorphous polyester polyol having a functionality ≥ 2 and a molar mass Mₙ of from 400 to 8000 g/mol, composed of succinic acid and at least two different dihydroxy compounds whose carbon skeleton contains from 2 to 12 carbon atoms,
c) from 0.1 to 5 wt.% of at least one isocyanate-reactive compound having a functionality ≥ 2 which contains potentially ionic groups,
d) from 0.1 to 17 wt.% of at least one polyamine having a molar mass Mₙ of from 32 to 400 g/mol and a functionality of from 1 to 3,
e) optionally from 0 to 15 wt.% of at least one non-ionic, isocyanate-reactive hydrophilising agent,
f) optionally from 0 to 7.0 wt.% of at least one polyhydroxy compound having a molar mass Mₙ < 400 g/mol and a functionality of from 2 to 4,
g) optionally from 0 to 8.0 wt.% of at least one neutralising agent for neutralising the potentially ionic groups of component c),
wherein the sum of components a) to g) is 100 wt.%.

2. Aqueous polyurethane urea dispersion according to claim 1, **characterised in that** the polyurethane urea polymers are composed of from 45 to 85 wt.% of at least one polyester polyol having a functionality 2 and a molar mass Mₙ of from 400 to 8000 g/mol, composed of succinic acid and at least two different dihydroxy compounds whose carbon skeleton contains from 2 to 12 carbon atoms.

3. Aqueous polyurethane urea dispersion according to claim 1, **characterised in that** the polyurethane urea polymers are composed of from 0.25 to 15.0 wt.% of at least one polyamine having a molar mass Mₙ of from 32 to 400 g/mol and a functionality of from 1 to 3.

4. Aqueous polyurethane urea dispersion according to claim 1, **characterised in that** the polyester polyol has a glass transition temperature Tg in the range from -80°C to 0°C, determined by DSC measurement according to DIN 65467 at a heating rate of 20 K/minute.

5. Aqueous polyurethane urea dispersion according to claim 1, **characterised in that** the dihydroxy compounds are selected from the group consisting of ethylene glycol, 1,2-propanediol, 1,3-propanediol, 1,4-butanediol, 2,3-butanediol, 2-methyl-1,3-propanediol, 1,5-pentanediol, neopentyl glycol, 1,6-hexanediol, 3-methyl-1,5-pentanediol, 1,8-octanediol, 1,10-decanediol, 1,12-dodecanediol, diethylene glycol, triethylene glycol, dipropylene glycol, tripropylene glycol and oligotetrahydrofurans having hydroxyl end groups.

6. Use of an aqueous polyurethane urea dispersion according to one or more of claims 1 to 5 for coating a substrate selected from the group consisting of textiles, leather, paper, glass fibres, plastics fibres and graphite fibres.

## Patentansprüche

1. Wässrige Polyurethanharnstoffdispersion, enthaltend Polyurethanharnstoffpolymere aus
a) 5 bis 40 Gew.-% mindestens eines aliphatischen oder aromatischen Polyisocyanats mit einer Funktionalität ≥ 2,
b) 40 bis 90 Gew.-% mindestens eines amorphen Polyesterpolyols mit einer Funktionalität ≥ 2 und einer Molmasse Mₙ von 400 bis 8000 g/mol aus Bernsteinsäure und mindestens zwei verschiedenen Dihydroxyverbindungen, deren Kohlenstoffgerüst 2 bis 12 Kohlenstoffatome enthält,
c) 0,1 bis 5 Ges.-% mindestens einer isocyanatreaktiven Verbindung mit einer Funktionalität ≥ 2, die potentiell ionische Gruppen enthält,
d) 0,1 bis 17 Ges.-% mindestens eines Polyamins mit einer Molmasse Mₙ von 32 bis 400 g/mol und einer Funktionalität von 1 bis 3,
e) gegebenenfalls 0 bis 15 Gew.-% mindestens eines nichtionischen, isocyanatreaktiven Hydrophilierungsmittels,
f) gegebenenfalls 0 bis 7,0 Gew.-% mindestens einer Polyhydroxyverbindung mit einer Molmasse Mₙ < 400 g/mol und einer Funktionalität von 2 bis 4,
g) gegebenenfalls 0 bis 8,0 Gew.-% mindestens eines Neutralisationsmittels zur Neutralisation der potentiell ionischen Gruppen der Komponente c),
wobei sich die Summe der Komponenten a) bis g) auf 100 Gew.-% beläuft.

2. Wässrige Polyurethanharnstoffdispersion nach Anspruch 1, **dadurch gekennzeichnet, dass** die Polyurethanharnstoffpolymere aus 45 bis 85 Gew.-% mindestens eines Polyesterpolyols mit einer Funktionalität ≥ 2 und einer Molmasse Mₙ von 400 bis 8000 g/mol aus Bernsteinsäure und mindestens zwei verschiedenen Dihydroxyverbindungen, deren Kohlenstoffgerüst 2 bis 12 Kohlenstoffatome enthält, bestehen.

3. Wässrige Polyurethanharnstoffdispersion nach Anspruch 1, **dadurch gekennzeichnet, dass** die Polyurethanharnstoffpolymere aus 0,25 bis 15,0 Gew.-% mindestens eines Polyamins mit einer Molmasse Mₙ von 32 bis 400 g/mol und einer Funktionalität von 1 bis 3 bestehen.

4. Wässrige Polyurethanharnstoffdispersion nach Anspruch 1, **dadurch gekennzeichnet, dass** das Polyesterpolyol eine durch DSC-Messung gemäß DIN 65467 mit einer Heizrate von 20 K/Minute bestimmte Glasübergangstemperatur Tg im Bereich von -80°C bis 0°C aufweist.

5. Wässrige Polyurethanharnstoffdispersion nach Anspruch 1, **dadurch gekennzeichnet, dass** die Dihydroxyverbindungen aus der Gruppe bestehend aus Ethylenglykol, 1,2-Propandiol, 1,3-Propandiol, 1,4-Butandiol, 2,3-Butandiol, 2-Methyl-1,3-propandiol, 1,5-Pentandiol, Neopentylglykol, 1,6-Hexandiol, 3-Methyl-1,5-pentandiol, 1,8-Octandiol, 1,10-Decandiol, 1,12-Dodecandiol, Diethylenglykol, Triethylenglykol, Dipropylenglykol, Tripropylenglykol und Oligotetrahydrofuranen mit Hydroxylendgruppen ausgewählt sind.

6. Verwendung einer wässrigen Polyurethanharnstoffdispersion nach einem der Ansprüche 1 bis 5 zum Beschichten eines Substrats aus der Gruppe bestehend aus Textilien, Leder, Papier, Glasfasern, Kunststofffasern und Graphitfasern.

## Revendications

1. Dispersion aqueuse de polyuréthane-urée contenant des polymères de polyuréthane-urée composés de
a) 5 à 40% en poids d'au moins un polyisocyanate aliphatique ou aromatique présentant une fonctionnalité ≥ 2,
b) 40 à 90% en poids d'au moins un polyesterpolyol amorphe présentant une fonctionnalité ≥ 2 et une masse molaire Mₙ de 400 à 8000 g/mole, composé d'acide succinique et d'au moins deux composés dihydroxy différents dont le squelette carboné contient 2 à 12 atomes de carbone,
c) 0,1 à 5% en poids d'au moins un composé réactif avec isocyanate présentant une fonctionnalité ≥ 2 qui contient des groupes potentiellement ioniques,
d) 0,1 à 17% en poids d'au moins une polyamine présentant une masse molaire Mₙ de 32 à 400 g/mole et une fonctionnalité de 1 à 3,
e) éventuellement 0 à 15% en poids d'au moins un agent d'hydrophilisation non ionique, réactif avec isocyanate,
f) éventuellement 0 à 7,0% en poids d'au moins un composé polyhydroxy présentant une masse molaire Mₙ < 400 g/mole et une fonctionnalité de 2 à 4,
g) éventuellement 0 à 8,0% en poids d'au moins un agent de neutralisation pour neutraliser les groupes potentiellement ioniques du constituant C),
la somme des constituants a) à g) valant 100% en poids.

2. Dispersion aqueuse de polyuréthane-urée selon la revendication 1, **caractérisée en ce que** les polymères de polyuréthane-urée sont composés de 45 à 85% en poids d'au moins un polyesterpolyol amorphe présentant une fonctionnalité ≥ 2 et une masse molaire Mₙ de 400 à 8000 g/mole, composé d'acide succinique et d'au moins deux composés dihydroxy différents dont le squelette carboné contient 2 à 12 atomes de carbone,

3. Dispersion aqueuse de polyuréthane-urée selon la revendication 1, **caractérisée en ce que** les polymères de polyuréthane-urée sont composés de 0,25 à 15,0% en poids d'au moins une polyamine présentant une masse molaire Mₙ de 32 à 400 g/mole et une fonctionnalité de 1 à 3.

4. Dispersion aqueuse de polyuréthane-urée selon la revendication 1, **caractérisée en ce que** le polyesterpolyol présente une température de transition vitreuse Tg dans la plage de -80°C à 0°C, déterminée par mesure par DSC (calorimétrie à balayage différentiel) selon la norme DIN 65467 à une vitesse de chauffage de 20 K/minute.

5. Dispersion aqueuse de polyuréthane-urée selon la revendication 1, **caractérisée en ce que** les composés dihydroxy sont choisis dans le groupe constitué par l'éthylèneglycol, le 1,2-propanediol, le 1,3-propanediol, le 1,4-butanediol, le 2,3-butanediol, le 2-méthyl-1,3-propanediol, le 1,5-pentanediol, le néopentylglycol, le 1,6-hexanediol, le 3-méthyl-1,5-pentanediol, le 1,8-octanediol, le 1,10-décanediol, le 1,12-dodécanediol, le diéthylèneglycol, le triéthylèneglycol, le dipropylèneglycol, le tripropylèneglycol et les oligotétrahydrofurannes présentant des groupes terminaux hydroxyle.

6. Utilisation d'une dispersion aqueuse de polyuréthane-urée selon l'une ou plusieurs des revendications 1 à 5 pour le revêtement d'un substrat choisi dans le groupe constitué par les textiles, le cuir, le papier, les fibres de verre, les fibres de plastique et les fibres de graphite.
